Europäisches Patentamt

European Patent Office

Office européen des brevets

(11) Numéro de publication : **0 393 606 B1**

# (12) FASCICULE DE BREVET EUROPEEN

(45) Date de publication du fascicule du brevet :
02.12.92 Bulletin 92/49

(51) Int. Cl.⁵ : **G04C 13/11**

(21) Numéro de dépôt : **90107301.5**

(22) Date de dépôt : **18.04.90**

(54) **Pièce d'horlogerie électronique à affichage analogique.**

(30) Priorité : **21.04.89 CH 1535/89**

(43) Date de publication de la demande :
**24.10.90 Bulletin 90/43**

(45) Mention de la délivrance du brevet :
**02.12.92 Bulletin 92/49**

(84) Etats contractants désignés :
**DE FR GB**

(56) Documents cités :
**CH-A- 627 044**
**GB-A- 2 154 767**
**US-A- 4 483 627**
**US-A- 4 800 545**

(73) Titulaire : **Eta SA Fabriques d'Ebauches**
**Schild-Rust-Strasse 17**
**CH-2540 Granges (CH)**

(72) Inventeur : **Triponez, André**
**La Communance 94**
**CH-2516 Lamboing (CH)**
Inventeur : **Rebeaud, Jean-Philippe**
**Planches-Vallier 5**
**CH-2088 Cressier (CH)**

(74) Mandataire : **de Raemy, Jacques et al**
**ICB Ingénieurs Conseils en Brevets SA**
**Passage Max. Meuron 6**
**CH-2001 Neuchâtel (CH)**

EP 0 393 606 B1

## Description

La présente invention concerne les pièces d'horlogerie électroniques à affichage analogique et notamment, mais pas exclusivement, les montres de ce genre.

La plupart des montres électroniques à affichage analogique qui existent actuellement sont des montres dans lesquelles les organes indicateurs sont entraînés par un moteur électromagnétique unique, de type pas à pas monophasé et bipolaire, qui est conçu pour ne tourner normalement que dans un sens, par pas de 180°, en réponse à des impulsions de polarité alternée.

A une certaine époque les moteurs de ce genre comprenaient un rotor avec un aimant permanent généralement cylindrique, à aimantation diamétrale, un stator formé de deux parties polaires constituées par deux pièces distinctes et situées dans un même plan, qui présentaient des faces polaires en forme de portions de cylindre pour embrasser le rotor et qui étaient séparées de part et d'autre de celui-ci par des fentes étroites, et une bobine entourant un noyau auquel les pièces polaires du stator étaient fixées.

De plus, les pièces polaires du stator étaient disposées de façon que leurs faces polaires soient légèrement excentrées, en sens contraire, par rapport à l'axe de rotation du rotor afin de créer pour ce rotor deux positions de repos stables bien définies, angulairement distantes de 180° et dans lesquelles son axe d'aimantation faisait un angle d'environ 45° avec l'axe qui joignait les fentes de séparation entre ces pièces.

Ces moteurs présentaient en fait de gros inconvénients.

En effet, pour qu'ils fonctionnent de façon sûre et qu'ils aient un rendement optimal, il fallait que l'excentricité des faces polaires de leurs pièces polaires soit réglée avec une grande précision.

Pour cela, on devait tout d'abord monter les moteurs sur leurs supports, par exemple des platines, qui étaient munis de goupilles autour desquelles leurs pièces polaires pouvaient pivoter, effectuer ensuite le réglage au moyen d'excentriques dont ils étaient munis et à l'aide d'outils spéciaux, et enfin immobiliser ces pièces polaires sur les supports au moyen de vis. Ce réglage prenait donc beaucoup de temps. D'autre part, il fallait concevoir les mouvements de montres de façon que l'on puisse voir les parties des pièces polaires situées au voisinage des rotors et accéder aux excentriques et aux vis de blocage, ce qui fait que les ponts qui permettaient de maintenir les rotors en place ne pouvaient pratiquement pas servir à autre chose. Enfin, il arrivait que l'on soit obligé d'effectuer à nouveau les mêmes opérations d'ajustement lorsqu'on devait démonter les montres ou lorsque celles-ci avaient été soumises à des chocs.

C'est la raison pour laquelle ces moteurs n'ont servi que pendant très peu de temps et ont fait place à ceux, beaucoup plus faciles à fabriquer et à utiliser, que l'on trouve à présent dans les montres.

Ces moteurs actuels se présentent essentiellement sous trois formes et ne se distinguent en fait de ceux dont il vient d'être question qu'au niveau de leurs stators.

Les plus simples et de loin les plus courants sont ceux qui possèdent un stator qui est fait d'une seule pièce découpée dans une plaque en matériau magnétique doux et qui comporte dans sa partie centrale un évidement délimité par une paroi interne de forme essentiellement cylindrique, dans lequel est placé coaxialement un rotor. Dans ces moteurs, les parties polaires sont reliées entre elles par des isthmes, c'est-à-dire des parties étroites, facilement et rapidement saturables en flux magnétique, qui jouent pratiquement le même rôle que les fentes entre les pièces polaires des moteurs précédents et l'excentricité de ces pièces polaires est remplacée par des encoches ou des plats diamétralement opposés que présente la paroi interne de leur stator.

Dans les deux autres formes de moteurs monophasés bipolaires que l'on rencontre dans certaines montres, mais beaucoup plus rarement, on retrouve l'idée de deux pièces polaires distinctes.

Dans un cas, ces pièces polaires présentent les mêmes faces polaires excentrées que celles des anciens moteurs dont on a parlé, mais elles sont alors reliées et soudées entre elles, de part et d'autre du rotor par des éléments intercalaires en matériau amagnétique ou pratiquement, de façon à former un stator monobloc.

Dans l'autre cas, les pièces polaires continuent à être séparées par des fentes mais leurs faces polaires en forme de portions de cylindre ne sont plus excentrées et sont munies d'encoches pour définir les positions de repos du rotor et le moteur comporte en plus un manchon cylindrique en matériau amagnétique, solidaire d'une plaque de base sur laquelle ce moteur est monté, qui entoure coaxialement le rotor et qui sert d'élément de positionnement et d'appui pour les faces polaires des pièces polaires.

Quelle que soit la façon dont ils sont réalisés, ces moteurs monophasés bipolaires ont l'avantage d'être simples, peu volumineux et de faible prix de revient mais ils ont aussi un gros défaut.

Lorsqu'on les utilise normalement dans des montres, c'est-à-dire lorsqu'on se contente de les faire tourner dans le sens pour lequel ils sont prévus et qui permet de faire avancer les organes indicateurs, on est obligé de prévoir pour la modification des informations affichées et avant tout la mise à l'heure, soit des dispositifs mécaniques qui permettent une correction de l'indication du temps dans les deux sens, avance et retard, soit des dispositifs électroniques n'assurant qu'une correction unidirectionnelle. Dans le second cas, le moteur est, lors d'une correction, alimenté par des impulsions de fréquence fixe ou dépendante de la vitesse d'actionnement d'un organe de commande manuel le qui est nettement supérieure à celle des impulsions qu'il reçoit en mode de fonctionnement normal. Toutefois, pour qu'il puisse répondre à chacune des impulsions de correction, cette fréquence doit rester assez basse, généralement ne pas dépasser 32 ou 64 Hz, d'où des temps de correction qui peuvent être très longs et inadmissibles pour des montres à aiguille de secondes.

Les solutions les plus anciennes qui ont effectivement été mises en pratique et qui ont permis de résoudre au moins partiellement ce problème sont au nombre de deux.

La première consiste à garder le même moteur pas à pas monophasé bipolaire et à le faire tourner également en marche arrière en le commandant d'une façon particulière. Ainsi, on continue à bénéficier des avantagés de ce genre de moteur mais les performances en marche arrière sont très médiocres par rapport à celles obtenues en marche avant.

La seconde solution c'est d'utiliser un moteur bidirectionnel comme celui qui fait, l'objet du brevet US 4 371 821 et qui ne présente pas cet inconvénient.

Ce moteur qui tourne lui aussi par pas de 180° comprend le même rotor qu'un moteur monophasé, un stator en une seule pièce avec trois parties polaires réunies entre elles par des isthmes, qui présente lui aussi un évidement essentiellement cylindrique pour le logement du rotor et des encoches dans la paroi interne entourant cet évidement pour définir deux positions de repos à 180° l'une de l'autre pour ce rotor, et deux bobines entourant deux noyaux qui relient mécaniquement et magnétiquement l'une des parties polaires respectivement aux deux autres. Un tel moteur est évidemment plus encombrant et d'un prix de revient plus élevé qu'un moteur monophasé.

Ces deux solutions permettent d'effectuer électroniquement des mises à l'heure et, par exemple, des changements de fuseau horaire beaucoup plus rapidement dans des montres qui ne comprennent que des aiguilles de minutes et d'heures mais, malheureusement, elles ne sont pas encore suffisantes pour pouvoir être appliquées à des montres à aiguille de secondes et/ou à indicateur de quantième.

C'est l'une des raisons pour lesquelles on a commencé, il y a quelque temps, à réaliser des montres avec deux moteurs pour entraîner des organes ou des groupes d'organes indicateurs séparément.

Une autre raison c'est l'économie d'énergie que cela permet de réaliser. C'est le cas notamment pour une montre dans laquelle les deux moteurs servent à entraîner, d'une part, des aiguilles de secondes et de minutes et, d'autre part, une aiguille d'heures et un indicateur de quantième, ou pour une montre dans laquelle des aiguilles de secondes, de minutes et d'heures sont actionnées par un premier moteur et un disque de quantième par un deuxième moteur mais pour laquelle on a été obligé de renoncer à une mise à l'heure et à la date électronique.

Une troisième raison c'est que l'on peut ainsi augmenter facilement le nombre de fonctions que la montre peut remplir, chronographe, alarme, etc.

Enfin, une quatrième raison c'est qu'il est alors possible de réduire le nombre de pièces du rouage de la montre.

Actuellement, pour profiter encore plus de tous ces avantages que présente le fait de ne pas se limiter à un seul moteur on arrive à fabriquer des montres qui en comportent quatre et même parfois cinq.

L'inconvénient, c'est évidemment que, par exemple, deux moteurs reviennent deux fois plus cher et occupent deux fois plus de place dans une montre qu'un seul, ou pratiquement s'ils ne sont pas tout à fait identiques.

Cela explique que l'on a eu très vite l'idée de concevoir des moteurs avec un stator commun pour deux rotors ou même plus.

Cela dit, au moins depuis l'époque des moteurs monophasés bipolaires dont on a parlé tout au début on a généralement l'habitude de fabriquer des stators plats ou les pièces polaires qui les composent en partant d'une plaque de matériau magnétique doux en leur donnant la forme voulue par étampage simple ou progressif, en les plaçant ensuite en vrac dans des bacs et en les chauffant ainsi dans des fours pour les soumettre à une opération de recuit qui permet de réaligner les cristaux du matériau dont ils sont formés, de supprimer les tensions mécaniques à l'intérieur de celui-ci, etc., autrement dit de redonner à ce matériau les bonnes propriétés magnétiques qu'il avait plus ou moins perdues par écrouissage au moment de l'étampage.

Or, cette façon de faire pose un problème. En effet, les stators plats ou leurs pièces polaires ont toujours des parties relativement fragiles. C'est le cas notamment des cornes que les pièces polaires doivent présenter pour pouvoir entourer plus ou moins un rotor ou des isthmes des stators en une seule pièce. Par conséquent, au moment où ces stators ou ces pièces polaires sont mis en vrac dans les bacs et vidés de ceux-ci ou même simplement lorsqu'ils bougent pendant leur transport il y a en a toujours certains qui se déforment ou se cassent et qui ne sont plus utilisables, ce qui conduit à une augmentation du prix de revient des moteurs que l'on réalise avec ceux qui restent intacts.

De plus, il est bien évident que plus les stators et le nombre de parties fragiles qu'ils comprennent sont grands, plus les risques de déformations et de cassures augmentent et plus on perd d'argent chaque fois que l'on doit en éliminer un, étant donné que leur coût de fabrication et très souvent les investissements nécessaires pour leur mise au point deviennent eux aussi de plus en plus élevés.

Donc, pour les stators de moteurs à deux rotors que l'on commence à réaliser, ce problème devient important, surtout si l'on s'arrange pour que ces rotors soient très près l'un de l'autre afin de réduire le plus possible le nombre de mobiles du rouage des montres munies de ce genre de moteurs.

Pour le résoudre, il suffit de se souvenir d'une solution qui a été trouvée pour supprimer les inconvénients de réglage des moteurs monophasés à stator en deux pièces dont il a été précédemment question, en premier lieu, et qui permettait en même temps de l'éliminer pour de tels moteurs.

Cette solution qui a fait l'objet du brevet GB 1 457 676 et qui a été utilisée pendant deux ou trois ans consistait tout d'abord à découper dans une plaque de matériau magnétique doux une pièce avec un évidement, dont les contours intérieur et extérieur correspondaient exactement à la forme et à la position relative des pièces polaires du stator que l'on voulait obtenir. Cette pièce était ensuite soudée entièrement sur une plaque de support en matériau amagnétique dont le contour extérieur correspondait en grande partie au sien pour permettre de la positionner correctement avant de la souder et qui présentait un trou rond dont la circonférence circonscrivait la paroi de son évidement. Après cela, on procédait à une nouvelle opération de découpage pour réaliser les fentes qui devaient séparer les deux pièces polaires et on chauffait l'ensemble pour soumettre le stator à un recuit. Naturellement, pour que les pièces polaires ne soient pas soumises, pendant ce recuit et au moment de leur refroidissement, à des contraintes et des déformations et pour qu'elles restent positionnées correctement l'une par rapport à l'autre, on devait choisir pour la plaque de support un matériau qui avait le même coefficient de dilatation thermique ou presque que celui du stator.

Par rapport à ce qui se faisait avant, cette plaque de support avait donc bien alors aussi pour effet de renforcer les pièces polaires du stator et d'assurer une parfaite protection de celles-ci.

De plus, il est tout à fait possible d'adjoindre une telle plaque à n'importe quel stator plat pour qu'elle joue également ce rôle pour lui et souvent en limitant son étendue pour qu'elle ne couvre qu'une zone dans laquelle se trouvent les parties fragiles de celui-ci.

Toutefois, si l'on se contentait de faire cela on se heurterait à deux autres problèmes.

Le premier, c'est que s'il est vrai que la présence de plaques de renforcement peut effectivement permettre de réduire largement le prix de revient des grands stators en éliminant pratiquement totalement le risque d'avoir des déchets après leur recuit et malgré ce que coûtent ces plaques et leur fixation sur les stators ou des stators sur elles, cela est beaucoup moins vrai pour les stators de petites dimensions ou les pièces polaires de ceux-ci qui sont quand même moins fragiles et dont la fabrication revient maintenant nettement moins cher. Dans ce cas, le fait de prévoir des plaques de renforcement pour éviter de perdre un certain pourcentage d'unités ne serait plus très économique. Il pourrait même parfois ne l'être plus du tout et devenir par conséquent sans intérêt.

Le deuxième problème, c'est que lorsqu'elles se trouveraient ensuite dans des montres ou d'autres pièces d'horlogerie, ces plaques deviendraient des éléments qui ne feraient qu'augmenter le nombre de composants de celles-ci et qui prendraient de la place sans ne plus être d'aucune utilité.

Par ailleurs, la demande de brevet CH 627 044 décrit une montre électronique munie d'un moteur monophasé classique dont les deux pièces polaires sont également montées sur une plaque et dans laquelle cette plaque sert de palier pour le rotor du moteur et éventuellement pour certains mobiles du rouage de la montre.

Malheureusement, cette idée d'utiliser la plaque comme palier ne permet de supprimer dans la montre que des pièces comme une platine ou un pont qui sont des pièces relativement grandes et par conséquent assez faciles à fabriquer et à monter.

Pour cette raison elle n'est pas toujours utile ou suffisante pour apporter une solution satisfaisante aux problèmes d'encombrement et surtout de coût supplémentaire que pose l'adjonction d'une plaque de renforcement à un moteur.

Le but de l'invention est de fournir une autre solution à la fois plus souple et plus efficace que celle du brevet CH 627 044 pour résoudre ces problèmes.

Ce but est atteint grâce au fait que dans une pièce d'horlogerie électronique à affichage analogique selon l'invention qui comprend notamment un moteur électromagnétique avec au moins un rotor à aimant permanent monté à rotation autour d'un axe, un stator essentiellement plat comportant au moins deux parties polaires qui entourent partiellement le rotor et sont disposées sensiblement perpendiculairement à son axe de rotation et une bobine couplée magnétiquement à ce stator, des organes indicateurs pour afficher des informations de temps, des mobiles pour relier cinématiquement ces organes indicateurs au moteur et une plaque de renforcement du stator de ce moteur qui est fixée d'un côté de ce stator auxdites parties polaires, qui couvre au moins partiellement ces dernières et qui est en plus, elle aussi, conçue pour constituer en même temps au moins un autre élément de la pièce d'horlogerie, cette plaque de renforcement comprend une partie principale liée rigidement aux parties polaires du stator du moteur et une partie flexible qui peut se déplacer par rapport à ce stator et qui forme l'autre élément de la pièce d'horlogerie.

Cet élément peut être purement mécanique, comme on le verra par la suite, ou électromécanique comme, par exemple, une lame de contact électrique.

Comme les éléments flexibles sont assez nombreux dans une pièce d'horlogerie à affichage analogique il est possible de choisir celui ou ceux que la plaque de renforcement peut constituer pour pouvoir réduire l'épaisseur et/ou la surface de cette pièce d'horlogerie.

D'autre part, ces éléments flexibles sont souvent des petites pièces de forme plus ou moins compliquée dont le coût de fabrication et de montage est plus élevé que celui d'une platine ou d'un pont.

Le but de l'invention est donc bien atteint.

De plus, il est bien évident que dans une pièce d'horlogerie selon l'invention la plaque de renforcement peut en plus servir de palier pour le ou les rotors du moteur et éventuellement pour un ou plusieurs mobiles de rouage.

L'invention sera mieux comprise à la lecture de la description qui suit d'une forme possible de mise en oeuvre. Cette description se réfère au dessin annexé sur lequel :

- la figure 1 est une vue de dessus d'un exemple de stator de moteur à deux rotors, couvert d'une plaque de renforcement prévue pour constituer en plus une partie du dispositif de commande manuelle d'une montre électronique dans laquelle le moteur en question et cette plaque sont incorporés;

- la figure 2 montre partiellement et vue de dessus une variante du stator de la figure 1;

- la figure 3 est une vue également de dessus d'une partie de la montre dont on vient de parler; et

- la figure 4 est une vue en coupe partielle, à plus grande échelle, selon la ligne brisée IV-IV de la figure 3, à laquelle ont été ajoutés les organes indicateurs de la montre.

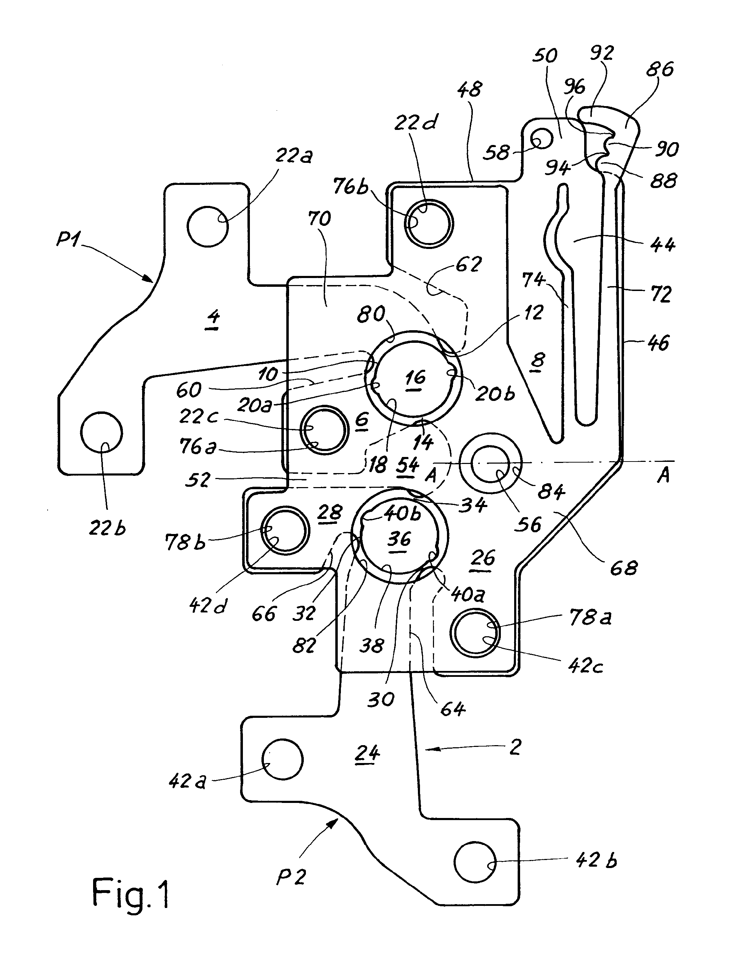

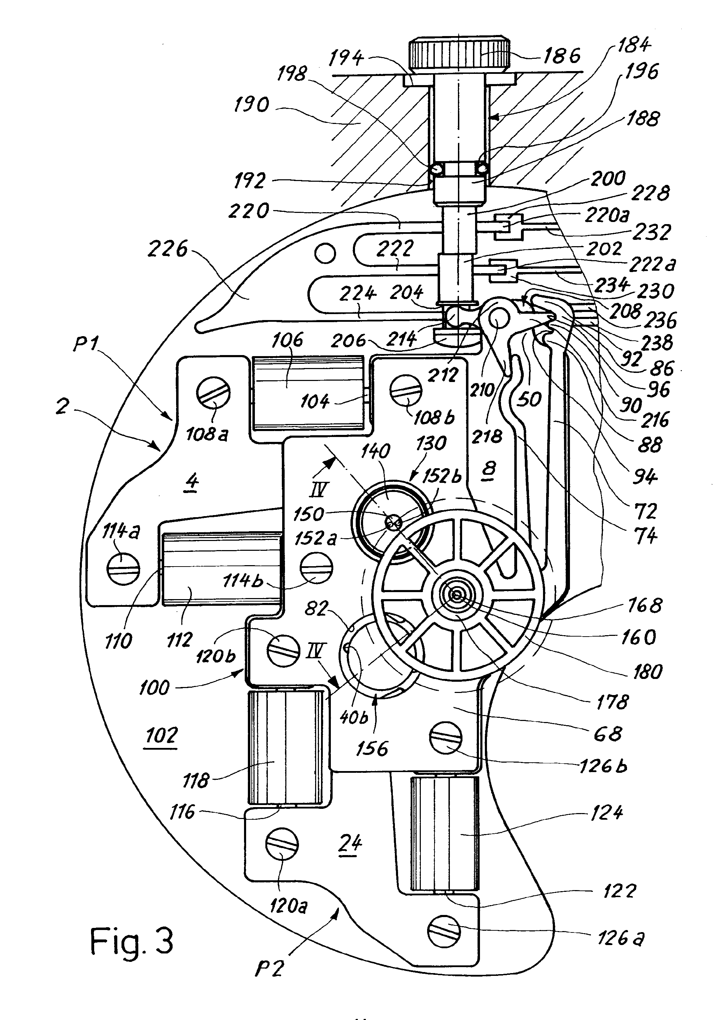

Le stator plat 2, pour moteur à deux rotors, qui est représenté à la figure 1 est constitué par une seule pièce réalisée par exemple en un alliage ferro-nickel comme celui qui est commercialisé sous la marque "VACOPERM" ou sous la marque "PERMIMPHY".

Ce stator peut être considéré comme étant formé de deux parties P1 et P2, séparées par la ligne A-A et disposées perpendiculairement l'une par rapport à l'autre, qui correspondent chacune au stator d'un moteur bidirectionnel comme celui qui fait l'objet du brevet US 4 371 821 précité.

La partie P1 présente en effet trois parties polaires 4, 6 et 8, qui sont réunies entre elles par des isthmes 10, 12 et 14, un évidement 16 qui est entouré par un paroi interne sensiblement cylindrique 18, formée par ces parties polaires et ces isthmes, et qui est destiné à recevoir un rotor à aimant permanent bipolaire, et deux encoches diamétralement opposées 20a et 20b prévues dans la paroi interne 18 pour créer deux positions de repos angulairement distantes de 180° pour ce rotor.

De plus, cette partie P1 est conformée et percée de quatre trous 22a, 22b, 22c et 22d pour permettre de fixer sur elle, par exemple par des vis, deux noyaux entourés chacun par une bobine, qui relieront la partie polaire 4, respectivement, aux parties polaires 6 et 8, en étant situés de part et d'autre de celle-ci et sensiblement parallèles à la ligne A-A.

De la même façon, la partie P2 du stator 2 comprend trois parties polaires 24, 26 et 28 qui correspondent respectivement à celles 4, 6 et 8 de la partie P1 mais qui n'ont pas du tout la même forme ni la même grandeur sauf en ce qui concerne la partie 24 qui ne diffère que très peu de la partie 4.

On retrouve également dans cette partie P2 trois isthmes 30, 32 et 34 qui relient deux à deux les parties polaires 24, 26 et 28, un évidement 36 délimité par une paroi interne 38 essentiellement cylindrique et de même diamètre que celle, 18, de la partie P1, pour le logement d'un autre rotor à aimant bipolaire, deux encoches 40a et 40b diamétralement opposées dans la paroi 38 et des trous 42a, 42b, 42c et 42d pour la fixation de deux autres noyaux entourés de deux autres bobines qui relieront la partie polaire 24 aux parties polaires 26 et 28, en étant placés de chaque côté de cette partie 24, mais qui seront, eux, sensiblement perpendiculaires à la ligne A-A.

Par ailleurs, la configuration et la disposition des parties P1 et P2 du stator sont telles

1. que les deux parties polaires qui se rejoignent sur la ligne A-A soient les parties 8 et 26;

2. que la partie 8 soit nettement plus grande que les autres pour que le stator ait grâce à elle un coin à peu près à angle droit 44, avec un côté rectiligne 46 qui part de la ligne A-A et qui lui est perpendiculaire et un autre côté 48 qui présente près du précédent une protubérance 50;

3. que les évidements 16 et 36 soient proches l'un de l'autre et aient leurs centres situés sur une droite sensiblement perpendiculaire à la ligne A-A; et

4. que la partie polaire 28 soit près de la partie 6 et séparée d'elle par une fente à bords parallèles 52, qui est orientée dans la direction de la ligne A-A et qui est prolongée vers l'intérieur du stator par une cavité 54 qui permet de former les isthmes 14 et 34 par lesquels ces parties polaires 6 et 28 sont reliées respectivement aux parties 8 et 26.

De plus, le stator 2 comporte deux autres trous cylindriques 56 et 58 dont l'utilité apparaîtra par la suite. Le premier, 56, de ces trous est situé près du fond de la cavité 54, de façon que son axe soit à égale distance de ceux des évidements 16 et 36, et le second 58, qui est plus petit, en bout de la protubérance 50.

En regardant la figure 1, il est facile de s'apercevoir qu'à cause des évidements 16 et 36, de la fente 52, de la cavité 54 et des quatres entailles plus ou moins profondes 60, 62, 64 et 66 qui séparent respectivement les parties polaires 4 et 6, 4 et 8, 24 et 26 et 24 et 28, ce stator présente normalement toute une zone particulièrement fragile, englobant tous ces vides, dans laquelle il peut facilement se plier ou se tordre, principalement au niveau des isthmes 10, 12, 14, 30, 32 et 34 où il peut même aller jusqu'à se casser, lorsqu'il est manipulé avec d'autres, sans précaution.

Cela confirme ce qui a été dit précédemment à propos des moteurs qui comprennent deux rotors rapprochés et pour lesquels la présence d'une plaque de renforcement est particulièrement justifiée.

Dans le cas présent, cette plaque de renforcement, qui est désignée par le repère 68, se compose d'une partie principale 70 dont le rôle est effectivement d'empêcher le stator 2 de se déformer et de se rompre et qui, pour cela, a été plaquée et fixée rigidement sur celui-ci, de préférence par soudage ou éventuellement par collage, et de deux languettes 72 et 74 rattachées à cette partie principale et qui, elles, n'ont pas été liées au stator.

D'autre part, la plaque 68 a une épaisseur nettement inférieure à celle du stator 2, par exemple à peu près trois fois plus faible, et le matériau qui la constitue n'est pas seulement un matériau amagnétique dont le coefficient de dilatation thermique est égal ou très proche de celui du matériau du stator, mais également un matériau suffisamment élastique pour que les languettes 72 et 74 soient assez facilement flexibles. Lorsque le stator est effectivement en "VACOPERM" ou en "PERMIMPHY", ce matériau peut être avantageusement du cupro-béryllium ou l'acier commercialisé sous la marque "PHYNOX" par la société IMPHY, qui est un alliage de fer, de cobalt, de chrome, de nickel et de molybdène.

Pour en revenir à la partie principale 70, on peut voir qu'elle couvre pratiquement entièrement les parties polaires 6, 26 et 28, la fente 52, la cavité 54 et les entailles 60, 62, 64 et 66 et seulement partiellement les parties polaires 4, 8 et 24 dont les zones les plus éloignées des évidements 16 et 36 sont suffisamment massives et résistantes pour ne pas avoir besoin d'être protégées, et qu'elle est percée de sept trous cylindriques 76a, 76b, 78a, 78b, 80, 82 et 84 respectivement coaxiaux aux trous 22c, 22d, 42c et 42d, pour la fixation des noyaux de bobines, aux évidements 16 et 36 et au trou 56.

On peut voir également que les trous de la partie principale 70 sont tous plus grands que ceux du stator au droit desquels ils se trouvent et que la différence de diamètre va en augmentant lorsque l'on passe des trous 76a, 76b, 78a et 78b aux trous 80 et 82 et au trou 84.

En ce qui concerne les trous 80 et 82 et les évidements 16 et 36, il est intéressant de noter que cette différence de diamètre est suffisamment importante pour que la plaque de renforcement 68 ne couvre en fait pas les isthmes 10, 12 et 14 ni les isthmes 30, 32 et 34. Cela n'empêche pas que la protection de ceux-ci est normalement très bien assurée étant donné que les parties polaires qu'ils réunissent sont totalement immobilisées l'une par rapport à l'autre.

Enfin, dans le coin 44 du stator et sur la partie laissée libre par la partie principale 70 de la plaque 68 se trouvent les deux languettes 72 et 74 qui s'étendent à peu près parallèlement au côté 46 de ce coin. La languette 74, qui est la plus éloignée de ce côté 46 arrive à peu près au niveau du côté 48 et a dans son prolongement la protubérance 50. Par contre, la languette 72 qui est très près du côté 46 se termine au-delà du côté 48 et à droite de la protubérance 50 par une extrémité 86 en forme de croissant, avec à l'intérieur deux petites saillies arrondies 88 et 90 qui forment entre elles et avec la pointe 92 du croissant deux encoches 94 et 96.

La fente 52 entre les pièces polaires 6 et 28 du stator est évidemment prévue pour constituer entre celles-ci une zone de haute réluctance magnétique et pour isoler ainsi les circuits magnétiques des deux parties du moteur qui correspondent aux parties P1 et P2 du stator. Autrement ces deux parties du moteur ne pourraient pas fonctionner séparément et correctement, même si on ne les alimentait pas en même temps mais alternativement, ce que l'on a intérêt à faire comme dans le cas de deux moteurs indépendants, pour une question de consommation.

Le problème, c'est qu'avec cette fente 52 les parties polaires 6 et 28 peuvent parfois ne pas se trouver exactement dans un même plan lorsque l'on fixe la plaque de renforcement sur la stator, ce qui fait que cette fixation peut ne pas être très bonne et lâcher dans cette région et qu'il y a alors encore certains risques de déformation et de rupture pour le stator.

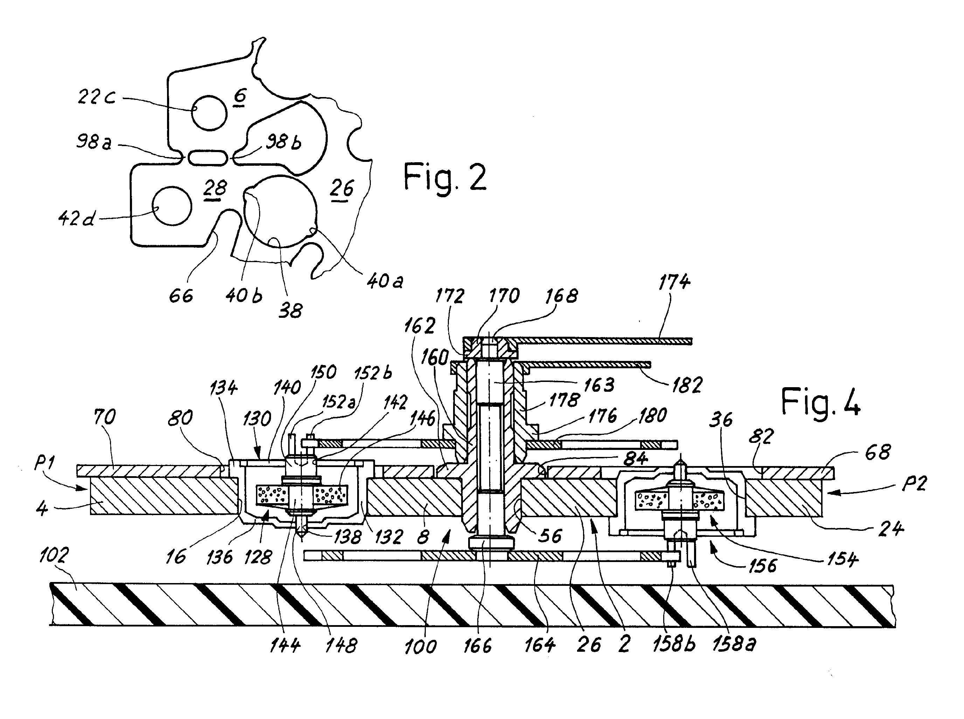

Pour éviter cela on peut faire comme le montre la figure 2, c'est-à-dire prévoir au moment de la réalisation du stator deux isthmes 98a et 98b pour relier mécaniquement entre elles les parties polaires 6 et 28. Du point de vue du fonctionnement des deux parties du moteur cela ne change pratiquement rien.

Si l'on regarde maintenant la partie de la montre qui est représentée, vue de dessus, à la figure 3, on distingue facilement ce moteur, désigné par le repère 100 et monté de façon adéquate sur un circuit imprimé 102, avec son stator 2, surmonté de sa plaque de renforcement 68, et ses quatre noyaux 104, 110, 116 et 122 qui sont entourés chacun par une bobine, respectivement, 106, 112, 118 et 124 et qui relient les différentes parties polaires des deux parties P1 et P2 du stator de la façon que l'on a déjà indiquée, en étant fixés à elles par des paires de vis, respectivement, 108a et 108b, 114a et 114b, 120a et 120b et 126a et 126b.

Par contre, ce que l'on ne peut pas voir sur cette figure c'est la façon dont les deux rotors sont réalisés. Pour le savoir, il faut se reporter à la figure 4 qui montre également les organes indicateurs de la montre et les mobiles par l'intermédiaire desquels ces organes indicateurs seront entraînés par les deux rotors.

Si l'on considère tout d'abord la partie gauche de cette figure 4, on peut constater que le rotor 128 de la partie du moteur 100 à laquelle appartient la partie 81 du stator 2 est enfermé dans un petit caisson 130. Ce caisson 130 comprend une pièce 132 en forme de jupe et en matériau amagnétique, par exemple en cupro-béryllium, qui a été enfoncé à force dans l'évidement 16 du stator et qui est immobilisé en translation par un rebord 134 entouré par la paroi du trou 80 de la plaque de renforcement 68. Le fond 136 de la pièce 132 est percé d'un trou central pour former un premier palier 138 pour le rotor. De plus, l'ouverture de cette pièce est obturée par une plaque 140 qui présente elle aussi un trou central pour constituer un deuxième palier 142 pour le rotor 128.

Ce rotor 128 comprend un arbre 144 sur lequel est monté un aimant bipolaire 146 et dont l'une des extrémités forme un pivot 148 qui est engagé dans le palier 138. L'autre extrémité 150 de cet arbre, qui est plus grosse, passe dans le palier 142 et se prolonge par deux ergots 152a et 152b qui jouent le rôle de pignon de sortie.

Il est clair qu'en montant ainsi le rotor 128 tout d'abord dans le caisson 130 et en fixant ensuite ce dernier sur le stator on évite l'opération délicate de centrage de ce rotor par rapport au stator lors du montage d'ensemble du mouvement.

Si l'on observe maintenant la partie droite de la figure on s'aperçoit que le deuxième rotor 154 est identique au premier et monté exactement de la même façon dans un autre caisson 156 chassé dans l'évidement 36 de l'autre partie P2 du stator, mais en sens contraire, ce qui fait que ses ergots 158a et 158b se trouvent du côté de ce stator opposé celui qui porte la plaque de renforcement 68.

Toujours sur la même figure 4 et entre les deux rotors 128 et 154, on retrouve le trou cylindrique 56 du stator (voir figure 1) dans lequel est chassée l'une des extrémités d'un tube de centre 160, qui s'étend en avant du stator 2 et qui possède un collet 162 logé dans le trou 84 de la plaque de renforcement 68, qui prend appui contre la face avant de ce stator.

Dans ce tube 160 passe un axe des minutes 163 qui porte à un bout et à l'arrière du stator une roue des minutes 164 qui engrène avec les ergots 158a et 158b du rotor 154.

Cet axe 163 est maintenu en place axialement dans le tube 160 grâce à un collet 166 qu'il présente juste en avant de la roue 164 et à une bague d'arrêt 170 avec un rebord 172, qui est chassée sur un embout 168 et à laquelle est fixée une aiguille des minutes 174.

Enfin, autour de la partie supérieure du tube de centre 160 est montée une roue à canon des heures 176 avec un tube 178 qui est retenue axialement par le collet 166 du tube 160 et par le rebord 172 de la bague 170 et qui porte une aiguille d'heure 182, et une roue des heures proprement dite 180, solidaire de ce tube 178 qui engrène avec les ergots 152a et 152b du rotor 128.

On va maintenant se reporter de nouveau à la figure 3 pour décrire le dispositif de commande manuel le qui est prévu pour permettre non seulement de mettre la montre à l'heure électroniquement mais aussi de sélectionner et de commander au moins une fonction autre que celle d'indiquer l'heure normale, qu'elle peut facilement remplir avec le moteur et les aiguilles dont elle est munie.

Ce dispositif comprend une tige rotative et coulissante 184, un système de positionnement et de rappel qui est conçu pour que cette tige puisse être déplacée axialement entre une position neutre ou de repos qu'elle occupe normalement, une position tirée stable et une position poussée instable, et un système de commutation qu'elle peut actionner pour produire des signaux électroniques de commande et de correction.

La tige de commande 184 comporte tout d'abord une couronne 186 pour pouvoir être manoeuvrée et une portion de guidage 188 qui lui permet de traverser la boîte 190 de la montre, qui est représentée très partiellement et très schématiquement sur le dessin, en passant dans un trou 192 qui assure son guidage en translation et en rotation et qui, en plus, définit sa position poussée grâce à une portée 194 qu'il présente du côté de la couronne et jusqu'à laquelle celle-ci peut être enfoncée à l'intérieur de la boîte. Par ailleurs, comme cela se fait habituellement la portion de guidage 188 est munie d'une gorge annulaire 196 pour la mise en place d'un joint d'étanchéité 198 entre elle et la boîte.

Cela dit, la tige 184 comporte également deux cames 200 et 202 accolées l'une à l'autre et une gorge 204 entre la deuxième, 200, de ces cames et un embout 206.

Les cames 200 et 202 sont semblables à celles qui font partie du dispositif de commande pour montre électronique qui fait l'objet du brevet US 4 379 642, c'est-à-dire qu'elles ont une forme sensiblement elliptique, que l'axe de la tige passe par leurs centres et que leurs grands axes font entre eux un angle d'environ 45°.

D'autre part, la tige 184 est disposée de façon que son embout 206 et sa gorge 204 soient très près de la protubérance 50 du stator du moteur 100, du côté opposé à celui où se trouve l'extrémité 86 de la languette 72 et de façon que le fond de cette gorge 204 soit à la fois tangent ou presque au plan dans lequel est située la face avant du stator et à l'arrière de celui-ci.

Le système de positionnement et de rappel de la tige comprend une tirette 208 et les deux languettes élastiques 72 et 74 de la plaque de renforcement 68.

La tirette 208 est constituée par une pièce plane qui peut pivoter autour d'un axe fixe 210 qui passe dans le trou 58 de la protubérance 50 du stator et qui est tenue par cet axe à rester toujours en contact ou presque avec le stator, afin de pouvoir coopérer avec les languettes 72 et 74 et la gorge 204 de la tige.

Pour la même raison, cette tirette comporte une partie centrale annulaire 212 qui entoure l'axe 210 et d'où partent trois branches 214, 216 et 218. La première, 214, de ces branches est engagée dans la gorge 204 et conformée pour pouvoir transformer un mouvement de translation de la tige en un mouvement de rotation de la tirette tout en permettant à cette tige de toujours pouvoir tourner librement. La deuxième branche 216, qui se situe en gros dans le prolongement de la première, a une forme à peu près triangulaire et un bout arrondi qui est en contact permanent avec le chant intérieur de l'extrémité 86 de la languette 72 et qui peut venir se loger dans l'une ou l'autre des deux encoches. Quant à la troisième branche 218, elle a une forme semblable à celle de la deuxième et elle est disposée de façon que le chant de sa partie terminale puisse toucher ou non celui de l'extrémité de la languette 74, du côté de la partie principale 70 de la plaque de renforcement 68.

Lorsque la tige de commande 184 est en position neutre, le chant de cette troisième branche 218 de la tirette est simplement en contact avec celui de la languette 74 qui est alors en position de repos et le bout de la deuxième branche 216 est engagé dans l'encoche 96 de la languette 72 qui est elle aussi en position de repos.

Supposons que la tige se trouve effectivement dans cette position neutre et que l'on tire sur elle. Tant que la force de traction que l'on exerce n'est pas assez importante pour que la pointe de la branche 216 puisse franchir la saillie 90 en faisant fléchir la languette 72, la tirette 208 ne tourne pas et cette pointe reste dans l'encoche 96 ou y revient si elle à réussi à s'en écarter légèrement, lorsqu'on relâche la tige. Par contre, si la force de traction est supérieure à une certaine valeur, la tirette tourne dans le sens horaire et la pointe de sa branche 216 vient se loger dans l'autre encoche 94 de la languette 72, alors que sa branche 218 s'écarte de la languette 74.

Si, après avoir réussi à amener ainsi la tige en position tirée, on continue à tirer sur elle avec une force normale, la saillie 88 de la languette 72 qui est beaucoup plus proéminente que l'autre 90 empêche la pointe de la branche 216 de sortir de l'encoche 94, cette saillie 88 ayant en plus une forme adaptée pour cela.

De la même manière pour ramener la tige en position neutre il faut exercer sur la couronne 186 une pression suffisante pour faire tourner la tirette 208 dans le sens anti-horaire et faire revenir la pointe de la branche 216 dans l'encoche 96.

La languette 72 constitue donc ici un ressort-sautoir de tirette qui permet d'assurer un verrouillage en position de la tirette et de la tige lorsque cette dernière est en position neutre et en position tirée.

Supposons maintenant que l'on appuie sur la couronne 186 pour faire passer la tige de sa position neutre à sa position poussée. La tirette 208 est alors obligée de tourner dans le sens anti-horaire ce qui fait que sa branche 218 appuie sur la languette 74 et l'amène à fléchir et que la pointe de son autre branche 216 sort et s'écarte de l'encoche 96 de la languette 72, du côté de sa pointe 92, et impose aussi un léger fléchissement à celle-ci.

Lorsque l'on relâche ensuite la tige, la languette 74 se détend et revient très vite à sa position de repos ce qui force la tirette à tourner en sens inverse et à ramener la tige en position neutre. Pendant ce temps, la languette 72 rejoint elle aussi sa position de repos et agit dans le même sens que la languette 74 sur la tirette en tendant à faire revenir automatiquement la pointe de sa branche 216 dans l'encoche 96 mais son action est beaucoup moins efficace et ne suffirait pas à elle seule à assurer un retour rapide de la tige en position neutre.

On peut donc considérer que la languette 74 constitue à elle seule un ressort de rappel pour la tirette 208.

Enfin, pour en terminer avec le dispositif de commande manuelle il reste à parler de son système de commutation.

Ce système de commutation comprend trois lames de contact élastiques et électriquement conductrices 220, 222 et 224 qui sont sensiblement parallèles entre elles et disposées perpendiculairement à l'axe de la tige de commande et qui ne forment qu'une seule pièce avec une embase 226 grâce à laquelle elles sont fixées sur le circuit imprimé 102 et qui est relié par exemple à la borne positive de la source de tension d'alimentation de la montre.

Les deux premières 220 et 222 de ces lames passent respectivement sous les cames 200 et 202 de façon que celles-ci puissent les actionner lorsque l'on tourne la tige 184 et que leurs extrémités libres 220a et 222a soient alors alternativement amenées en contact et éloignées de deux plages de contact fixes correspondantes 228 et 230, prévues sur le circuit imprimé 102, qui sont reliées par des pistes conductrices 232 et 234 au circuit intégré (non représenté) de la montre et, par l'intermédiaire de celui-ci, à la borne négative de la source de tension d'alimentation de la montre.

Comme cela est expliqué en détail dans le brevet US 4 379 642, un ensemble comme celui qui est formé par les deux cames 200 et 202, les lames 220 et 222 et les plages 228 et 230 permet de produire, en réponse à une rotation de la tige, deux trains d'impulsions déphasés l'un par rapport à l'autre de 45°, le signe de ce déphasage dépendant du sens de rotation de la tige, et la fréquence des impulsions de chaque train étant proportionnelle à sa vitesse de rotation.

La troisième lame de contact 224 passe elle aussi sous la tige et est engagée dans la gorge 204 de celle-ci.

Lorsque la tige est en position neutre, son extrémité libre qui n'est pas visible sur la figure se trouve entre deux autres plages de contact que l'on ne peut pas voir non plus sur la figure et qui sont reliées au circuit intégré de la montre par deux pistes conductrices 236 et 238. Par contre, lorsqu'on amène la tige en position tirée ou en position poussée l'extrémité libre de cette lame 224 vient en contact avec l'une ou l'autre de ces deux autres plages.

Avec un tel dispositif de commande, on peut par exemple effectuer une mise à l'heure et procéder à un changement de fuseau dans le sens de l'avance ou de retard en amenant la tige en position tirée et en la tournant dans un sens ou dans l'autre, lentement dans le premier cas et rapidement dans le second, et commander une fonction alarme en utilisant la rotation de la tige et ses positions tirée et poussée ou commander une fonction chronographe en agissant sur la tige comme sur un bouton-poussoir.

Dans l'éventualité d'une fonction chronographe et pour la mesure de temps courts le moteur serait commandé de façon que l'aiguille des minutes 174 soit transformée en aiguille de secondes et l'aiguille des heures 182 en aiguille de minutes.

Cela dit, l'invention n'est bien entendu pas limitée au mode de mise en oeuvre que l'on vient de décrire.

Par exemple, plutôt que d'utiliser une plaque de renforcement en matériau amagnétique, on pourrait parfois, à la rigueur, se contenter d'une plaque en un matériau de très faible perméabilité magnétique.

On pourrait également fixer la plaque sur le stator non pas par soudage ou collage mais par rivetage ou vissage mais cela reviendrait évidemment plus cher.

Dans d'autres modes de mise en oeuvre, cette plaque pourrait très bien constituer aussi, par exemple, un ressort de quantième ou, comme on l'a déjà laissé entendre, une bride de pile, une ou plusieurs lames élastiques pour produire des signaux de commande, comme celles qui font partie de la montre de la figure 3, ou bien encore une lame de contact pour une mise à la masse.

De plus, l'invention pourrait très bien aussi s'appliquer à des montres ou autres pièces d'horlogerie munies de moteurs de n'importe quel type, à stator plat en plusieurs pièces. Dans ce cas, la plaque de renforcement pourrait être conçue pour servir d'abord de support et permettre de fixer sur elle les différentes pièces du stator en les positionnant correctement l'une ou les unes par rapport à l'autre ou aux autres, à l'image de la plaque dont il est question dans le brevet GB 1 457 676.

Par ailleurs, pour des moteurs à grands stators qui auraient par exemple des rotors éloignés, on pourrait ne pas prévoir qu'une seule plaque de renforcement mais plusieurs, en s'arrangeant de préférence pour que chacune d'elles puisse remplir une autre fonction.

## Revendications

1. Pièce d'horlogerie électronique à affichage analogique, comprenant notamment un moteur électromagnétique (100) avec au moins un rotor (128, 154) à aimant permanent monté à rotation autour d'un axe, un stator (2) essentiellement plat comportant au moins deux parties polaires (4, 6, 8, 24, 26, 28) qui entourent partiellement le rotor et sont disposées sensiblement perpendiculairement à son axe de rotation et une bobine (106, 112, 118, 124) couplée magnétiquement à ce stator, des organes indicateurs (174, 182) pour afficher des informations de temps, des mobiles (163, 164, 176, 178) pour relier cinématiquement ces organes indicateurs au moteur et une plaque de renforcement (68) du stator de ce moteur qui est fixée d'un côté de ce stator auxdites parties polaires et qui les couvre au moins partiellement, en entourant de près ledit rotor, cette plaque de renforcement étant conçue pour constituer en même temps au moins un autre élément de la pièce d'horlogerie et cette pièce d'horlogerie étant caractérisée par le fait que ladite plaque de renforcement comprend une partie principale (70) liée rigidement auxdites parties polaires du stator et une partie flexible (72) qui peut se déplacer par rapport à ce stator et qui forme ledit autre élément.

2. Pièce d'horlogerie selon la revendication 1, comprenant également une tige de commande manuelle (184) qui peut être déplacée axialement entre une première et une deuxième positions stables, pour permettre de maodiifer les informations de temps affichées par lesdits organes indicateurs (174, 182) et une tirette (208) en prise avec cette tige de commande, caractérisée par le fait que ladite partie flexible de la plaque de renforcement (68) est une première languette (72) rattachée à ladite partie principale (76) et par le fait que cette première languette constitue un ressort-sautoir de tirette qui coopère avec ladite tirette pour définir lesdites positions stables de ladite tige de commande.

3. Pièce d'horlogerie selon la revendication 2, dans laquelle ladite tige (184) peut également être déplacée axialement entre ladite première position stable et une troisième position instable, caractérisée par le fait que ladite plaque de renforcement (68) comporte en plus une deuxième languette flexible (74) également rattachée à sa partie principale (70) et pouvant se déplacer par rapport audit stator (2) et que cette deuxième languette constitue un ressort de rappel qui agit sur ladite tirette (208) de façon à ramener automatiquement ladite tige dans ladite première position stable lorsqu'elle est relâchée après avoir été amenée dans ladite troisième position.

4. Pièce d'horlogerie selon la revendication 3, caractérisée par le fait que lesdites première, deuxième et troisième positions de la tige (184) sont respectivement une position de repos, une position tirée et une position poussée.

5. Pièce d'horlogerie selon la revendication 3 ou 4, caractérisée par le fait que ladite tirette (208) est constituée par une pièce plane qui peut pivoter autour d'un axe fixe (210) solidaire de l'une (8) des parties polaires (4, 6, 8, 24, 26, 28) dudit stator (2) et sensiblement perpendiculaire à celle-ci, cette pièce plane et lesdites languettes (72, 74) se trouvant sensiblement dans un même plan, et que ladite tirette comprend une partie centrale (212) à laquelle sont rattachées une première branche (214) qui est engagée dans une gorge (204) de ladite tige de commande, une deuxième branche (216) qui présente une pointe qui est en permanence en contact avec le chant de l'extrémité de la première languette (72) et qui peut venir se loger alternativement dans deux encoches 94, 96 de cette extrémité de la première languette, en franchissant une saillie (90) qui les sépare et en obligeant alors cette première languette à fléchir, et une troisième branche (218) avec une extrémité dont le chant est seulement en contact avec celui de l'extrémité de la deuxième languette (74) lorsque ladite tige est dans sa première position stable et qui oblige cette deuxième languette à fléchir lorsque cette tige est amenée dans sa troisième position.

6. Pièce d'horlogerie selon l'une des revendications précédentes, caractérisée par le fait que ledit moteur (100) comprend deux rotors (128, 154) à aimants permanents montés à rotation autour de deux axes sensiblement parallèles, un stator (2) en une seule pièce comportant trois premières parties polaires (4, 6, 8) réunies entre elles par des isthmes (10, 12, 14) pour former un premier évidement (16) dans lequel est placé un premier (128) de ces rotors, trois secondes parties polaires (24, 26, 28) qui sont également réunies par des isthmes (30, 32, 34) pour former un second évidement (36) dans lequel est placé le second rotor (154), deux premières bobines (106, 112) portées par deux noyaux respectifs (104, 110) qui relient l'une (4) desdites premières parties polaires du stator aux deux autres (6, 8), pour permettre de faire tourner le premier rotor, deux secondes bobines (118, 124) portées par deux autres noyaux respectifs (116, 122) qui relient l'une (24) desdites secondes parties polaires aux deux autres (26, 28), pour permettre de faire tourner le second rotor (154), et par le fait que ladite plaque de renforcement (68) couvre au moins partiellement chacune desdites premières et secondes parties polaires et comporte deux trous (80, 82) pour entourer de près chacun desdits rotors.

7. Pièce d'horlogerie selon la revendication 6, caractérisée par le fait que lesdites parties polaires (4, 6, 8, 24, 26, 28) du stator (2) sont conformées et disposées de façon que l'une (6) des premières soit seulement séparée de l'une (28) des secondes par une fente (152) et que ladite plaque de renforcement (68) couvre pratiquement entièrement ces deux parties polaires et cette fente.

8. Pièce d'horlogerie selon l'une des revendications précédentes, caractérisée par le fait que ladite plaque de renforcement (68) est en matériau amagnétique.

**Patentansprüche**

1. Elektronisches Zeitmeßgerät mit Analoganzeige, umfassend insbesondere einen elektromagnetischen Motor (100) mit mindestens einem drehbeweglich um eine Achse angeordneten Permanentmagnetrotor (128, 154), einen im wesentlichen flachen Stator (2), der mindestens zwei Polabschnitte (4, 6, 8, 24, 26, 28) umfaßt, welche teilweise den Rotor umschließen und im wesentlichen senkrecht zu seiner Drehachse angeordnet sind, und eine mit diesem Stator magnetisch gekoppelte Spule (106, 112, 118, 124), Anzeigeorgane (174, 182) zur Anzeige der Zeitinformationen, Räderwerkselemente (163, 164, 176, 178), welche kinematisch diese Anzeigeorgane mit dem Motor verbinden, und eine Verstärkungsplatte (68) des Stators dieses Motors, die auf einer Seite dieses Stators an den Polabschnitten befestigt ist und sie mindestens teilweise überdeckt unter dichtem Umschließen des Rotors, welche Verstärkungsplatte ausgebildet ist, um gleichzeitig mindestens ein weiteres Element des Zeitmeßgerätes zu bilden, welches Zeitmeßgerät dadurch gekennzeichnet ist, daß die Verstärkungsplatte einen Hauptabschnitt (70) umfaßt, der fest mit den Polabschnitten des Stators verbunden ist, und einen flexiblen Abschnitt (72), der relativ zu diesem Stator verlagerbar ist und das erwähnte andere Element bildet.

2. Zeitmeßgerät nach Anspruch 1, umfassend außerdem eine manuelle Steuerwelle (184), die axial verlagerbar ist zwischen einer ersten und einer zweiten stabilen Position zum Ermöglichen der Modifikation der von den Anzeigeorganen (174, 182) angezeigten Zeitinformationen sowie ein Zugelement (208) im Eingriff mit der Steuerwelle, dadurch gekennzeichnet, daß der flexible Abschnitt der Verstärkungsplatte (68) eine erste Zunge (172), verbunden mit dem Hauptabschnitt (76), ist, und daß die erste Zunge eine Klinkenfeder des Zugelements bildet, die mit dem Zugelement zusammenwirkt zum Definieren der stabilen Positionen der Steuerwelle.

3. Zeitmeßgerät nach Anspruch 2, bei dem die Welle (184) außerdem axial zwischen der ersten stabilen Position und einer dritten instabilen Position verlagerbar ist, dadurch gekennzeichnet, daß die Verstärkungsplatte (68) zusätzlich eine zweite flexible Zunge (74) umfaßt, ebenfalls mit ihrem Hauptabschnitt (70) verbunden und verlagerbar relativ zu dem Stator (2), und daß diese zweite Zunge eine Rückstellfeder bildet, die auf das Zugelement (208) derart einwirkt, daß die Welle automatisch in die erste stabile Position rückgeführt wird, wenn sie nach Verlagerung in die dritte Position freigegeben wird.

4. Zeitmeßgerät nach Anspruch 3, dadurch gekennzeichnet, daß die erste, zweite beziehungsweise dritte Position der Welle (184) eine Ruheposition, eine gezogene Position beziehungsweise eine eingedrückte Position sind.

5. Zeitmeßgerät nach Anspruch 3 oder 4, dadurch gekennzeichnet, daß das Zugelement (208) von einem ebenen Bauteil gebildet ist, das um eine stationäre Achse (210) drehbar ist, die mit einem (8) der Polabschnitte (4, 6, 8, 24, 26, 28) des Stators (2) und im wesentlichen senkrecht zu diesem ist, welches ebene Bauteil und welche Zungen (72, 74) sich im wesentlichen in der gleichen Ebene befinden, und daß das Zugelement einen Zentralabschnitt (212) umfaßt, an dem ein erster Arm (214), der in eine Nut (204) der Steuerwelle greift, ein zweiter Arm (216) mit einer Spitze, die permanent in Kontakt mit dem Endbereich der ersten Zunge (72) steht und sich alternativ in zwei Ausnehmungen (94, 96) dieses Endes der ersten Zunge unter Überspringen eines Vorsprungs (90), der jene trennt, legen kann und dabei diese erste Zunge zum Ausweichen zwingt, und ein dritter Arm (218) angebracht sind mit einem Ende, dessen Wirkbereich nur dann in Kontakt mit jenem des Endes der zweiten Zunge (74) steht, wenn die Welle in ihrer ersten stabilen Position ist, und der diese zweite Zunge zum Ausweichen zwingt, wenn die Welle in die dritte Position verlagert wird.

6. Zeitmeßgerät nach einem der vorangehenden Ansprüche, dadurch gekennzeichnet, daß der Motor (100) zwei Permanentmagnetrotoren (128, 154) umfaßt, die drehbeweglich um zwei im wesentlichen parallele Achsen sind, einen einstückigen Stator (2) mit drei ersten Polabschnitten (4, 6, 8), die miteinander durch Isthmen (10, 12, 14) verbunden sind zur Ausbildung einer ersten Ausnehmung (16), in der ein erster (128) dieser Rotoren plaziert ist, und mit drei zweiten Polabschnitten (24, 26, 28), die gleichermaßen durch Isthmen (30, 32, 34) verbunden sind zur Ausbildung einer zweiten Ausnehmung (36), in der der zweite Rotor (154) plaziert ist, zwei erste Spulen (106, 112), getragen von zwei zugeordneten Kernen (104, 110), welche den einen (4) der ersten Polabschnitte des Stators mit zwei anderen (6, 8) verbindet, um das Drehen des ersten Rotors zu ermöglichen, zwei zweite Spulen (118, 124), getragen von zwei weiteren zugeordneten Kernen (116, 122), welche einen (24) der zweiten Polabschnitte mit den beiden anderen (26, 28) verbindet zum Ermöglichen des Drehenlassens des zweiten Rotors (154), und daß die Verstärkungsplatte (68) mindestens teilweise jeden der ersten und zweiten Polabschnitte überdeckt und zwei Löcher (80, 82) aufweist zum Dichten und Schließen jedes der Rotoren.

7. Zeitmeßgerät nach Anspruch 6, dadurch gekennzeichnet, daß die Polabschnitte (4, 6, 8, 24, 26, 28) des Stators (2) derart ausgebildet und angeordnet sind, daß einer (6) der ersten, nur von einem (28) der zweiten durch einen Spalt (152) getrennt ist, und daß die Verstärkungsplatte (68) praktisch vollständig diese beiden Polabschnitte und diesen Spalt überdeckt.

8. Zeitmeßgerät nach einem der vorangehenden Ansprüche, dadurch gekennzeichnet, daß die Verstärkungsplatte (68) aus einem amagnetischem Material besteht.

**Claims**

1. Electronic timepiece with analog display comprising in particular an electromagnetic motor (100) with at least one permanent magnet rotor (128, 154) mounted to rotate around an axis, a basically flat stator (2) including at least two pole parts (4, 6, 8, 24, 26, 28) which partially surround the rotor and which are arranged substantially perpendicular to its axis of rotation and a winding (106, 112, 118, 124) magnetically coupled to such stator, indicator means (174, 182) for displaying time information, wheel sets (163, 164, 176, 178) for kinematically coupling these indicator means to the motor and a reinforcing plate (68) for the stator of this motor which is attached on one side of this stator to said pole parts and which covers them at least partially, in closely surrounding said rotor, said reinforcing plate being designed for constituting at the same time at least one other element of the timepiece and this timepiece being characterized by the fact that said reinforcing plate includes a main portion (70) rigidly coupled to said pole parts of the stator and a flexible portion (72) which may undergo displacement relative to the stator and which forms said other element.

2. Timepiece according to claim 1, also comprising a manual control stem (184) which may be axially displaced between a first and a second stable positions so as to enable modification of time information displayed by said time indicator means (174, 182) and a trigger piece (208) linked with said control stem, characterized by the fact that said flexible portion of the reinforcing plate (68) is a first tongue (72) attached to said main portion (76) and by the fact that this first tongue forms a trigger piece jumper spring which cooperates with said trigger piece so as to define said stable positions of said control stem.

3. Timepiece according to claim 2, in which said stem (184) may also be axially displaced between said first stable position and a third unstable position, characterized by the fact that said reinforcing plate (68) further includes a second flexible tongue (74) also attached to its main portion (70) and being able to undergo displacement relative to said stator (2) and that this second tongue constitutes a return spring which acts on said trigger piece (208) in a manner to return automatically said stem to said first stable position when it is released after having been brought into said third position.

4. Timepiece according to claim 3, characterized by the fact that said first, second and third positions of the stem (184) are respectively a rest position, a drawn-out position and a pushed-in position.

5. Timepiece according to claim 3 or 4, characterized by the fact that said trigger piece (208) is formed by a planar part which can pivot around a fixed axis (210) integral with one (8) of the pole parts (4, 6, 8, 24, 26, 28) of said stator (2) and substantially perpendicular thereto, said planar part and said tongues (72, 74) being located substantially in the same plane and that said trigger piece comprises a central portion (212) to which are joined a first branch (214) engaged in a groove (204) of said control stem, a second branch (216) exhibiting a point permanently in contact with the edge of the end of the first tongue (72) and which may be brought to be lodged alternatively in two notches (94, 96) in such end of the first tongue in crossing over a projection (90) which separates them and at that time forcing this first tongue to flex, and a third branch (218) with an end the edge of which is only in contact with that of the second tongue (74) when said stem is in its first stable position and which forces said second tongue to flex when said stem is brought into its third position.

6. Timepiece according to any one of the preceding claims, characterized by the fact that said motor (100) comprises two permanent magnet rotors (128, 154) mounted for rotation around two substantially parallel axes, a single piece stator (2) including three first pole parts (4, 6, 8) connected to one another by necks (10, 12, 14) to form a first recess (16) in which is placed a first (128) of these rotors, three second pole parts (24, 26, 28) which are likewise connected together by necks (30, 32, 34) to form a second recess (36) in which the second rotor (154) is placed, two first windings (106, 112) borne by two respective cores (104, 110) which couple one (4) of said first pole parts of the stator to the two others (6, 8) so as to enable bringing about rotation of the first rotor, two second windings (118, 124) borne by two other respective cores (116, 122) which couple one (24) of said second pole parts to the two others (26, 28), so as to enable bringing about rotation of the second rotor (154), and by the fact that said reinforcing plate (68) covers at least partially each of said first and second pole parts and includes two holes (80, 82) for closely surrounding each of said rotors.

7. Timepiece according to claim 6, characterized by the fact that said pole parts (4, 6, 8, 24, 26, 28) of the stator (2) are shaped and arranged in a manner such that one (6) of the first thereof is separated from one (28) of the second thereof only by a slot (152) and that said reinforcing plate (68) covers almost entirely such two pole parts and such slot.

8. Timepiece according to any one of the preceding claims, characterized by the fact that said reinforcing plate (68) is of non-magnetic material.

Fig.1

Fig. 3

Fig. 2

Fig. 4